# EUROPÄISCHE PATENTSCHRIFT

(11) **EP 1 326 469 B1**
(45) Veröffentlichungstag und Bekanntmachung des Hinweises auf die Patenterteilung: **04.10.2006**
(21) Anmeldenummer: 03003072.0
(22) Anmeldetag: 31.05.2000
(51) Int. Cl.: H04Q 7/38

(54) **Verfahren und Anordnung zur Überprüfung der Authentizität eines Dienstanbieters in einem Kommunikationsnetz**
Method and device for checking the authenticity of a service provider in a communications network
Procédé et dispositif pour vérifier l'authenticité d'un fournisseur de service dans un réseau de communications

(30) Priorität: 15.06.1999 DE 19927271
(43) Veröffentlichungstag der Anmeldung: 09.07.2003
(62) Teilanmeldung aus: 00943674.2
(73) Patentinhaber: SIEMENS AKTIENGESELLSCHAFT, 80333 München (DE)
(72) Erfinder: Cuellar, Jorge, Dr., 82065 Baierbrunn (DE); Horn, Günther, Dr., 81541 München (DE)

(56) Entgegenhaltungen:
- WO-A-91/01067
- US-A- 5 799 084

## Beschreibung

Die Erfindung betrifft ein Verfahren und eine Anordnung zur Überprüfung einer Authentizität eines ersten Kommunikationsteilnehmers in einem Kommunikationsnetz.

In einem Kommunikationsnetz werden im allgemeinen Daten zwischen Kommunikationsteilnehmern, beispielsweise einem Dienstanbieter und einem Dienstnutzer, übertragen. Um ein Kommunikationsnetz vor einem Eindringen eines nichtberechtigten Kommunikationsteilnehmers in das Kommunikationsnetz zu schützen, wird in der Regel die Authentizität eines jeden Kommunikationsteilnehmers überprüft.

Die US 5 799 084 A beschreibt ein Verfahren zur Authentifizierung einer Mobilstation in einem zellularen Netz, wobei im Netz ein von der Mobilstation empfangener Zällwert mit einem lokal gespeicherten Zällwert verglichen wird.

Aus Dokument [1] ist ein Verfahren und eine Anordnung zur Überprüfung einer Authentizität eines Kommunikationsteilnehmers, insbesondere eines Dienstanbieters oder eines Dienstnutzers, in einem Kommunikationsnetz bekannt.

Das aus dem Dokument [1] bekannte Verfahren und die entsprechende Anordnung basieren auf einem sogenannten 3G TS 33.102 Version 3.0.0-Draft-Standard, welcher eine Sicherheits-Architektur eines Mobilfunksystems beschreibt.

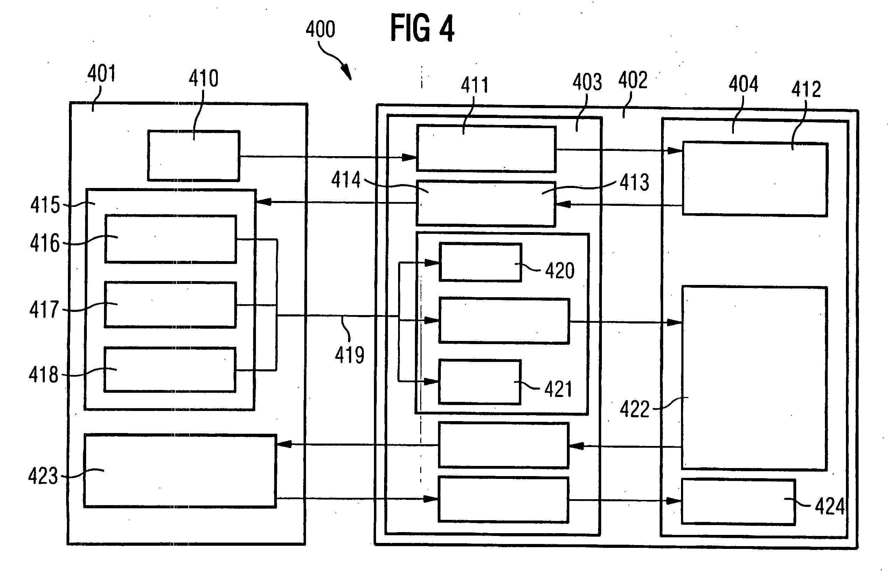

In **Fig.4** ist die Vorgehensweise bei einer Überprüfung einer Authentizität eines Kommunikationsteilnehmers, wie sie aus dem Dokument [1] bekannt ist, symbolhaft dargestellt und wird im folgenden kurz und auszugsweise erläutert.

Eine Übertragung von Daten ist in **Fig.4** jeweils durch einen Pfeil dargestellt. Eine Richtung eines Pfeils kennzeichnet eine Übertragungsrichtung bei einer Datenübertragung.

**Fig.4** zeigt ein Mobilfunksystem 400, umfassend einen Nutzer 401 einer Kommunikationsdienstleistung, beispielsweise ein Mobiltelefon, und einen Anbieter 402 einer Kommunikationsdienstleistung. Der Anbieter 402 umfaßt ein Einwählnetz 403 mit einem Einwählnetzbetreiber, bei dem der Nutzer 401 lokal eine Kommunikationsdienstleistung anfordert, und ein Heimatnetz 404 mit einem Heimatnetzbetreiber, bei dem der Nutzer 401 angemeldet und registriert ist.

Ferner weisen der Nutzer 401, das Einwählnetz 403 und das Heimatnetz 404 jeweils eine zentrale Verarbeitungseinheit mit einem Speicher auf, beispielsweise einen Server (Zentralrechner), mit welcher Verarbeitungseinheit die im folgenden beschriebene Vorgehensweise überwacht und gesteuert wird und auf welchem Speicher Daten gespeichert werden und/oder sind.

Das Einwählnetz 403 und das Heimatnetz 404 sind über eine Datenleitung, über welche digitale Daten übertragen werden können, miteinander verbunden. Der Nutzer 401 und das Einwählnetz 403 sind über ein beliebiges Übertragungsmedium zur Übertragung von digitalen Daten miteinander verbunden.

Bei einer Kommunikation wählt sich der Nutzer 401 in das Einwählnetz 403 ein 410. Zu Beginn der Kommunikation erfolgt eine Überprüfung sowohl der Authentizität des Nutzers 401 als auch der Authentizität des Anbieters 402.

Dazu fordert das Einwählnetz 403 sogenannte Authentifikationsdaten, mit welchen die Überprüfung der Authentizität des Nutzers 401 und des Anbieters 402 möglich ist, von dem Heimatnetz 404 an 411.

Die Authentifikationsdaten, welche von dem Heimatnetz 404 ermittelt werden, umfassen eine Zufallszahl und eine Sequenzfolgenummer des Anbieters 402. Die Sequenzfolgennummer des Anbieters 402 wird derart ermittelt, daß ein Zähler des Anbieters 402 bei jedem Kommunikationsversuch zwischen dem Nutzer 401 und dem Anbieter 402 die Sequenzfolgenummer des Anbieters 402 um den Wert 1 erhöht.

Es ist anzumerken, daß die Zufallszahl und die Sequenzfolgenummer des Anbieters 402 nur einen Teil der Authentifikationsdaten darstellen und nicht abschließend zu verstehen sind. Weitere Authentifikationsdaten sind aus [1] bekannt.

Das Heimatnetz 404 überträgt die angeforderten Authentifikationsdaten an das Einwählnetz 403 412. Das Einwählnetz 403 bearbeitet die empfangenen Authentifikationsdaten in geeigneter Weise 413 und überträgt die bearbeiteten Authentifikationsdaten an den Nutzer 401 414.

Der Nutzer 401 überprüft unter Verwendung einer eigenen Sequenzfolgenummer, welche entsprechend der Sequenzfolgenummer des Anbieters 402 gehandhabt wird, und der Sequenzfolgenummer des Anbieters 402 die Authentizität des Anbieters 402 415.

Die Vorgehensweise bei der Überprüfung der Authentizität des Anbieters 402 ist in [1] beschrieben.

Ein Ergebnis der Überprüfung der Authentizität des Anbieters 402, "Authentizität des Anbieters in Ordnung" 416, "Authentizität des Anbieters in Ordnung, aber ein Sequenzfehler aufgetreten" 417 oder "Authentizität des Anbieters nicht in Ordnung" 418, wird von dem Nutzer 401 an den Anbieter 402 übertragen 419.

Bei dem Ergebnis "Authentizität des Anbieters in Ordnung" 416 überprüft das Einwählnetz 403, wie es in [1] beschrieben ist, die Authentizität des Nutzers 401 420.

Bei dem Ergebnis "Authentizität des Anbieters nicht in Ordnung" 418 wird die Kommunikation unterbrochen bzw. neu begonnen 421.

Bei dem Ergebnis "Authentizität des Anbieters in Ordnung, aber ein Sequenzfehler aufgetreten" 417 erfolgt eine Resynchronisation derart, daß das Heimatnetz 404 eine Resynchronisationsanfrage an den Nutzer 401 sendet 422. Der Nutzer antwortet mit einer Resynchronisationsantwort, bei welcher Resynchronisationsdaten an das Heimatnetz 404 übertragen werden 423. In Abhängigkeit der Resynchronisationsantwort wird die Sequenzfolgenummer des Anbieters 402 verändert 424. Anschließend erfolgt die Prüfung der Authentizität des Nutzers 401, wie es aus [1] bekannt ist.

Die beschriebene Vorgehensweise weist den Nachteil auf, daß bei einer Überprüfung einer Authentizität eines Kommunikationsteilnehmers, insbesondere bei der Überprüfung der Authentizität eines Dienstanbieters, viele Daten zwischen den Kommunikationsteilnehmern übertragen werden müssen.

Somit liegt der Erfindung das Problem zugrunde, ein gegenüber dem bekannten Verfahren und der bekannten Anordnung vereinfachtes und verbessertes Verfahren sowie eine vereinfachte und verbesserte Anordnung zur Überprüfung einer Authentizität eines Kommunikationsteilnehmers in einem Kommunikationsnetz anzugeben.

Das Problem wird durch die Verfahren sowie durch die Anordnungen mit den Merkmalen gemäß den unabhängigen Patentansprüchen gelöst.

Bei dem Verfahren zur Überprüfung einer Authentizität eines ersten Kommunikationsteilnehmers in einem Kommunikationsnetz wird bei dem ersten Kommunikationsteilnehmers unter Verwendung einer Fehlererkennungsangabe des ersten Kommunikationsteilnehmers und einer Information über eine Zufallsangabe eine erste Fehlerinformation gebildet. Bei einem zweiten Kommunikationsteilnehmer in dem Kommunikationsnetz wird unter Verwendung einer Fehlererkennungsangabe des zweiten Kommunikationsteilnehmers und der Information über die Zufallsangabe eine zweite Fehlerinformation gebildet. Unter Verwendung der ersten Fehlerinformation und der zweiten Fehlerinformation wird die Authentizität des ersten Kommunikationsteilnehmers überprüft.

Bei der Anordnung zur Überprüfung einer Authentizität eines ersten Kommunikationsteilnehmers in einem Kommunikationsnetz ist der erste Kommunikationsteilnehmer derart eingerichtet, daß unter Verwendung einer Fehlererkennungsangabe des ersten Kommunikationsteilnehmers und einer Information über eine Zufallsangabe eine erste Fehlerinformation bildbar ist. Ferner weist die Anordnung einen zweiten Kommunikationsteilnehmer in dem Kommunikationsnetz auf, der derart eingerichtet ist, daß unter Verwendung einer Fehlererkennungsangabe des zweiten Kommunikationsteilnehmers und der Information über die Zufallsangabe eine zweite Fehlerinformation bildbar ist. Unter Verwendung der ersten Fehlerinformation und der zweiten Fehlerinformation ist die Authentizität des ersten Kommunikationsteilnehmers überprüfbar.

Unter der Überprüfung der Authentizität eines Kommunikationsteilnehmers in einem Kommunikationsnetz sind Verfahrensschritte zu verstehen, die im weiteren Sinn mit einer Überprüfung einer Berechtigung eines Kommunikationsteilnehmers zum Zugang zu einem Kommunikationsnetz oder einer Teilnahme an einer Kommunikation in einem Kommunikationsnetz durchgeführt werden.

Somit werden sowohl solche Verfahrensschritte umfaßt, die im Rahmen einer Überprüfung der Berechtigung eines Kommunikationsteilnehmers zum Zugang zu einem Kommunikationsnetz durchgeführt werden, als auch solche Verfahrensschritte umfaßt, die im Rahmen einer Bearbeitung oder einer Verwaltung von Daten, die bei der Überprüfung verwendet werden, durchgeführt werden.

Bevorzugte Weiterbildungen der Erfindung ergeben sich aus den abhängigen Ansprüchen.

Die im weiteren beschriebenen Weiterbildungen beziehen sich sowohl auf das Verfahren und die Anordnung.

Die Erfindung und die im weiteren beschriebenen Weiterbildungen können sowohl in Software als auch in Hardware, beispielsweise unter Verwendung einer speziellen elektrischen Schaltung realisiert werden.

In einer Ausgestaltung ist der erste Kommunikationsteilnehmer ein Dienstanbieter und/oder der zweite Kommunikationsteilnehmer ein Dienstnutzer in dem Kommunikationsnetz.

Bevorzugt wird als Fehlererkennungsangabe eine Sequenzfolgenummer verwendet.

In einer Ausgestaltung ist die Information über die Zufallsangabe eine Zufallszahl.

In einer Weiterbildung wird die Prüfung der Authentizität dadurch vereinfacht, daß eine Differenz zwischen der Fehlererkennungsangabe des ersten Kommunikationsteilnehmers und der Fehlererkennungsangabe des zweiten Kommunikationsteilnehmers ermittelt wird.

In einer Ausgestaltung wird die Prüfung der Authentizität dadurch hinsichtlich der Sicherheit des Kommunikationsnetzes weiter verbessert, daß die Differenz beschränkt wird

Bevorzugt wird eine Weiterbildung im Rahmen eines Mobilfunksystems eingesetzt. Bei dem Mobilfunksystem sind/ist der Dienstnutzer als Mobiltelefon und/oder der Dienstanbieter als Mobilfunknetzbetreiber realisiert.

In Figuren ist ein Ausführungsbeispiel der Erfindung dargestellt, welches im weiteren näher erläutert wird.

Es zeigen
- Figur 1: ein Mobilfunksystem;
- Figur 2: eine Skizze, in welcher symbolhaft eine Überprüfung einer Authentizität eines Korimunikationsteilnehmers dargestellt ist;
- Figur 3: ein Ablaufdiagramm, in dem einzelne Verfahrensschritte bei einer Überprüfung einer Authentizität eines Dienstanbieters in einem Kommunikationsnetz dargestellt sind;
- Figur 4: eine Skizze, in welcher symbolhaft eine Überprüfung einer Authentizität eines Kommunikationsteilnehmers gemäß dem 3G TS 33.102 Version 3.0.0-Standard dargestellt ist.

### Ausführungsbeispiel: Mobilfunksystem

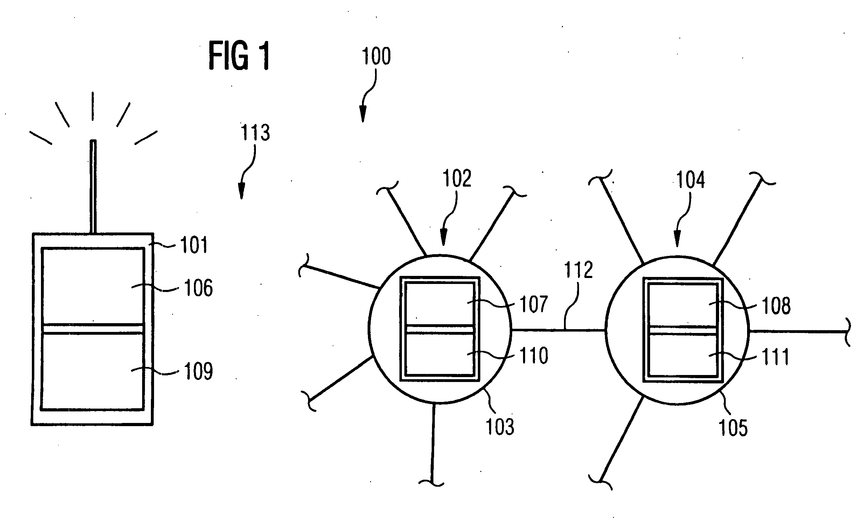

In **Fig.1** ist ein Mobilfunksystem 100 dargestellt. Das Mobilfunksystem 100 umfaßt ein Mobiltelefon 101, ein lokales Einwählnetz 102 mit einem Einwählnetzbetreiber 103 und ein Heimatnetz 104 mit einem Heimatnetzbetreiber 105.

Bei dem Heimatnetz 104 ist das Mobiltelefon 101 angemeldet und registriert.

Ferner weisen das Mobiltelefon 101, das Einwählnetz 102 und das Heimatnetz 104 jeweils eine zentrale Verarbeitungseinheit 106, 107, 108 mit einem Speicher 109, 110, 111 auf, mit welchen Verarbeitungseinheiten 106, 107, 108 die im folgenden beschriebene Vorgehensweise überwacht und gesteuert wird und auf welchen Speichern 109, 110, 111 Daten gespeichert werden und/oder sind.

Das Einwählnetz 102 und das Heimatnetz 104 sind über eine Datenleitung 112, über welche digitale Daten übertragen werden können, miteinander verbunden. Das Mobiltelefon 101 und das Einwählnetz 102 sind über ein beliebiges Übertragungsmedium 113 zur Übertragung von digitalen Daten miteinander verbunden.

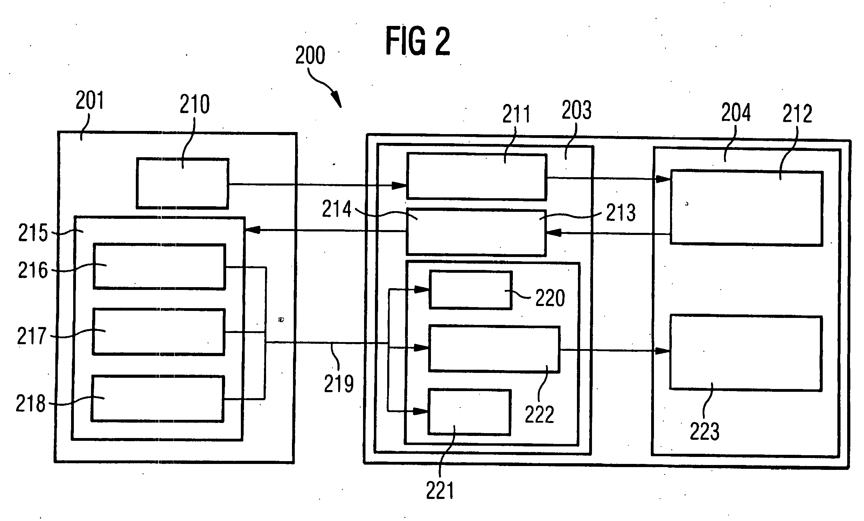

In **Fig.2** ist die Vorgehensweise bei einer Überprüfung einer Authentizität des Mobiltelefons 101 und die Vorgehensweise bei einer Überprüfung der Authentizität des Heimatnetzes 104 bzw. des Heimatnetzbetreibers 105 symbolhaft dargestellt und wird im folgenden kurz und auszugsweise erläutert.

Eine Übertragung von Daten ist in **Fig.2** jeweils durch einen Pfeil dargestellt. Eine Richtung eines Pfeils kennzeichnet eine Übertragungsrichtung bei einer Datenübertragung.

Die im folgende beschriebene und in **Fig.2** symbolhaft dargestellte Vorgehensweise basiert auf einem sogenannten 3G TS 33.102 Version 3.0.0-Standard, welcher eine Sicherheits-Architektur eines Mobilfunksystems beschreibt und in [1] beschrieben ist.

Bei einer Kommunikation wählt sich das Mobiltelefon 201 in das Einwählnetz 203 ein 210. Zu Beginn der Kommunikation erfolgt eine Überprüfung sowohl der Authentizität des Mobiltelefon 201 als auch der Authentizität des Heimatnetzes 204 bzw. des Heimatnetzbetreibers.

Dazu fordert das Einwählnetz 203 Authentifikationsdaten, mit welchen die Überprüfung der Authentizität des Nutzers 201 und des Heimatnetzes 204 bzw. des Heimatnetzbetreibers möglich ist, von dem Heimatnetz 204 an 211.

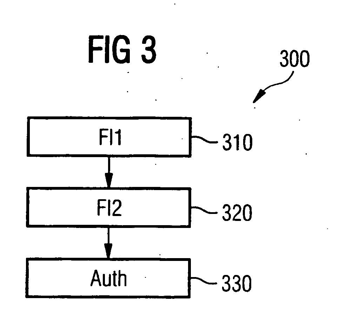

Die Authentifikationsdaten, welche von dem Heimatnetz 204 ermittelt werden, umfassen eine Zufallszahl und eine Sequenzfolgenummer des Heimatnetzes 204 (vgl. **Fig.3** Schritt 310). Die Sequenzfolgennummer des Heimatnetzes 204 wird derart ermittelt, daß ein Zähler des Heimatnetzes 204 bei jedem Kommunikationsversuch zwischen dem Mobiltelefon 201 und dem Heimatnetz 204 die Sequenzfolgenummer des Heimatnetzes 204 um den Wert 1 erhöht.

Es ist anzumerken, daß die Zufallszahl und die Sequenzfolgenummer des Heimatnetzes 204 nur einen Teil der Authentifikationsdaten darstellen und nicht abschließend zu verstehen sind. Weitere Authentifikationsdaten sind in [1] genannt.

Das Heimatnetz 204 überträgt die angeforderten Authentifikationsdaten an das Einwählnetz 203 212. Das Einwählnetz 203 bearbeitet die empfangenen Authentifikationsdaten in geeigneter Weise 213 und überträgt die bearbeiteten Authentifikationsdaten an das Mobiltelefon 201 214.

Das Mobiltelefon 201 überprüft unter Verwendung einer eigenen Sequenzfolgenummer, welche entsprechend der Sequenzfolgenummer des Heimatnetzes 204 gehandhabt wird, und der Sequenzfolgenummer des Heimatnetzes 204 die Authentizität des Heimatnetzes 204 215. Entsprechend dem Heimatnetz 204 weist das Mobiltelefon 201 ebenfalls einen Zähler auf.

Die Vorgehensweise bei der Überprüfung der Authentizität des Heimatnetzes 204 ist in [1] beschrieben. Davon abweichende Verfahrensschritte sind im folgenden beschrieben.

Im Rahmen der Überprüfung der Authentizität des Heimatnetzes 203 wird eine sogenannte Überlaufprüfung des Zählers des Mobiltelefons 201 durchgeführt. Durch diese Überlaufprüfung wird ein Überlauf eines zulässigen Zahlenbereichs des Zählers des Mobiltelefons 201 verhindert.

Bei der Überlaufprüfung werden folgende Bedingungen geprüft:
1) Sequenzfolgenummer des Heimatnetzes 204 > Sequenzfolgenummer des Mobiltelefons 201;
2) Sequenzfolgenummer des Heimatnetzes 204 - Sequenzfolgenummer des Mobiltelefons 201 < vorgebbare Abweichung (hier: 1000000);
wobei für die vorgebbare Abweichung gilt:
- vorgebbare Abweichung hinreichend groß, um im normalen bzw. störungsfreien Kommunikationsbetrieb auszuschließen, daß:
   Sequenzfolgenummer des Heimatnetzes 204 - Sequenzfolgenummer des Mobiltelefons 201 > vorgebbare Abweichung;
- max. zulässige Sequenzfolgenummer des Mobiltelefon 201/vorgebbare Abweichung hinreichend groß, um auszuschließen, daß die max. zulässige Sequenzfolgenummer des Mobiltelefon 201 im Betrieb erreicht wird.

Ein Ergebnis der Überprüfung der Authentizität des Heimatnetzes 204, "Authentizität in Ordnung" 216, "Authentizität in Ordnung, aber ein Sequenzfehler aufgetreten" 217 oder "Authentizität nicht in Ordnung" 218, wird von dem Mobiltelefon 201 an das Heimatnetz 204 übertragen 419.

Bei dem Ergebnis "Authentizität in Ordnung" 216 überprüft das Einwählnetz 203, wie es in [1] beschrieben ist, die Authentizität des Mobiltelefons 201 220.

Bei dem Ergebnis "Authentizität nicht in Ordnung" 218 wird die Kommunikation unterbrochen oder neu begonnen 221.

Bei dem Ergebnis "Authentizität in Ordnung, aber ein Sequenzfehler aufgetreten" 217 erfolgt eine Resynchronisation 222. Unter Resynchronisation ist eine Änderung der Sequenzfolgenummer des Heimatnetzes 204 zu verstehen.

Dazu überträgt das Mobiltelefon 201 Resynchronisationsdaten an das Einwählnetz 203 222.

Die Resynchronisationsdaten umfassen dieselbe Zufallszahl, die im Rahmen der Authentifikationsdaten übertragen wurde, sowie die Sequenzfolgenummer des Mobiltelefons 201 (vgl. **Fig.3** Schritt 320).

Das Einwählnetz 203 bearbeitet die Resynchronisationsdaten in geeignet Weise und überträgt die bearbeiteten Resynchronisationsdaten an das Heimatnetz 204.

Das Heimatnetz überprüft unter Verwendung der bearbeiteten Resynchronisationsdaten die Sequenzfolgenummer des Mobiltelefons 201 und die Sequenzfolgenummer des Heimatnetzes 204 und verändert gegebenenfalls die Sequenzfolgenummer des Heimatnetzes 204 223 (vgl. **Fig.3** Schritt 330).

Anschließend überträgt das Heimatnetz 204 neue Authentifikationsdaten, welche gegebenenfalls die veränderte Sequenzfolgenummer des Heimatnetzes 204 umfassen, an das Einwählnetz 203.

Zur Veranschaulichung der beschriebenen Vorgehensweise sind in **Fig.3** wichtige Schritte 300 der Vorgehensweise dargestellt.

**Fig.3** zeigt einen ersten Schritt 310, im Rahmen dessen die Authentifikationsdaten (erste Fehlerinformation) ermittelt werden.

Im Rahmen eines zweiten Schritts 320 werden die Resynchronisationsdaten (zweite Fehlerinformation) ermittelt.

Im Rahmen eines dritten Schritts 330 werden unter Verwendung der Resynchronisationsdaten die Sequenzfolgenummer des Mobiltelefons und die Sequenzfolgenummer des Heimatnetzes überprüft.

Im folgenden wird eine Alternative des ersten Ausführungsbeispiels beschrieben.

Bei dem alternativen Ausführungsbeispiel ist ein Verfahren realisiert, mit dem das Heimatnetz gegenüber einem Datenverlust bei einem Systemabsturz sicherer gemacht wird.

Dazu wird jeweils in einem vorgebbaren zeitlichen Abstand die aktuelle Sequenzfolgenummer des Heimatnetzes in dem Speicher des Heimatnetzes gespeichert. Eine bei einem Systemabsturz des Heimatnetzes verloren gegangene Sequenzfolgenummer des Heimatnetzes wird derart wiederhergestellt, daß zu dem Wert der gespeicherten Sequenzfolgenummer ein vorgebbarer Aufschlagswert addiert wird. Der vorgebbare Aufschlagswert ist derart bemessen, daß die Summe aus Sequenzfolgenummer des Mobiltelefons und vorgebbarer Abweichung nicht überschritten wird.

Bei dem alternativen Ausführungsbeispiel wird der vorgebbare Aufschlagswert derart bestimmt, daß eine durchschnittliche, aus Erfahrungswerten bei einem Betrieb des Kommunikationsnetzes bestimmte Zahl von Authentifikationsversuchen eines Tages des Heimatnetzes mit einem Faktor mit dem Wert 10 multipliziert wird.

In diesem Dokument ist folgende Veröffentlichung zitiert:
[1] 3G TS 33.102 Version 3.0.0-Draft-Standard, 3^{rd} Generation Partnership Project, Technical Specification Group Services and System Aspects, 3G Security, Security Architecture, 05/1999.

## Patentansprüche

1. Verfahren zur Überprüfung einer Authentizität eines ersten Kommunikationsteilnehmers in einem Kommunikationsnetz,
- bei dem bei dem ersten Kommunikationsteilnehmer unter Verwendung einer erste Fehlererkennungsangabe und einer Information über eine Zufallsangabe eine Authentifikationsinformation gebildet wird,
- bei dem die Authentifikationsinformation und die Information über die Zufallsangabe vom ersten Kommunikationsteilnehmer zu einem zweiten Kommunikationsteilnehmer übertragen wird,
- bei dem bei dem zweiten Kommunikationsteilnehmer unter Verwendung der Authentifikationsinformation und der Information über die Zufallsangabe die erste Fehlererkennungsangabe wiederhergestellt wird,
- bei dem bei dem zweiten Kommunikationsteilnehmer überprüft wird, ob die wiederhergestellte erste Fehlererkennungsangabe in einem vorgebbaren Bereich liegt,
- bei dem eine Sequenzfehlerinformation gebildet wird, wenn die wiederhergestellte erste Fehlererkennungsangabe nicht in einem vorgebbaren Bereich liegt,
- bei dem die Sequenzfehlerinformation von dem zweiten Kommunikationsteilnehmer zu dem ersten Kommunikationsteilnehmer übertragen wird und mittels der Sequenzfehlerinformation eine Resynchronisation der Fehlererkennungsangaben ausgeführt wird,
- bei dem der erste Kommunikationsteilnehmer ein Service Provider und der zweite Kommunikationsteilnehmer ein Service Nutzer in einem Kommunikationsnetz ist.

2. Verfahren nach Anspruch 1,
- bei dem die Überprüfung, ob die wiederhergestellte erste Fehlererkennungsangabe in dem vorgebbaren Bereich liegt, durchgeführt derart,
- dass bei dem zweiten Kommunikationsteilnehmer eine zweite Fehlererkennungsangabe gebildet wird,
- das eine Differenz zwischen den beiden Fehlererkennungsangaben gebildet wird,
- dass ein Sequenzfehler gebildet wird, wenn die Differenz nicht im vorgebbaren Bereich liegt.

3. Verfahren nach Anspruch 1,
- bei dem der erste Kommunikationsteilnehmer die Sequenzfehlerinformation verifiziert,
- und der erste Kommunikationsteilnehmer ein Wert der ersten Fehlererkennungsangabe in Abhängigkeit eines Wertes der zweiten Fehlererkennungsangabe verändert.

4. Verfahren nach Anspruch 3,
- bei dem die Verifikation und die Veränderung bei dem ersten Kommunikationsteilnehmer durchgeführt wird.

5. Verfahren nach Anspruch 3 oder 4,
- bei dem die Sequenzfehlerinformation die Information über die Zufallsangabe und die zweite Fehlererkennungsangabe enthält.

6. Verfahren nach einem der Ansprüche 2 bis 5,
- bei dem die erste und/oder zweite Fehlererkennungsangabe Sequenzfolgenummern sind/eine Sequenzfolgenummer ist.

7. Verfahren nach einem der vorangehenden Ansprüche,
- bei dem die Information über die Zufallsangabe eine Zufallszahl ist.

8. Verfahren nach Anspruch 1,
- bei dem der Service Provider ein Mobilfunkbetreiber eines Mobilfunksystems und/oder der Service Nutzer ein Mobiltelefon sind/ist.

9. Anordnung zur Überprüfung einer Authentizität eines ersten Kommunikationsteilnehmers in einem Kommunikationsnetz,
- bei der der erste Kommunikationsteilnehmer derart eingerichtet ist, dass bei dem ersten Kommunikationsteilnehmer unter Verwendung einer ersten Fehlererkennungsangabe und einer Information über eine Zufallsangabe eine Authentifikationsinformation gebildet wird,
- derart ausgestaltet, daß die Authentifikationsinformation und die Information über die Zufallsangabe vom ersten Kommunikationsteilnehmer zu einem zweiten Kommunikationsteilnehmer übertragen wird,
- bei der der zweite Kommunikationsteilnehmer derart eingerichtet ist, dass bei dem zweiten Kommunikationsteilnehmer unter Verwendung der Authentifikationsinformation und der Information über die Zufallsangabe die erste Fehlererkennungsangabe wiederhergestellt wird und bei dem zweiten Kommunikationsteilnehmer überprüft wird, ob die wiederhergestellte erste Fehlererkennungsangabe in einem vorgebbaren Bereich liegt,
- derart ausgestaltet, daß eine Sequenzfehlerinformation gebildet wird, wenn die wiederhergestellte erste Fehlererkennungsangabe nicht in einem vorgebbaren Bereich liegt,
- derart ausgestaltet, daß die Sequenzfehlerinformation von dem zweiten Kommunikationsteilnehmer zu dem ersten Kommunikationsteilnehmer übertragen wird und mittels der Sequenzfehlerinformation eine Resynchronisation der Fehlererkennungsangaben ausgeführt wird,
- bei dem der erste Kommunikationsteilnehmer ein Service Provider und der zweite Kommunikationsteilnehmer ein Service Nutzer in einem Kommunikationsnetz ist.

## Claims

1. Method for checking the authenticity of a first communication subscriber in a communications network,
- in which an authentication information item is formed in the first communication subscriber using a first fault detection data item and an information item relating to a random data item,
- in which the authentication information and the information relating to the random data item are transmitted from the first communication subscriber to a second communication subscriber,
- in which the first fault detection information item is recovered in the second communication subscriber using the authentication information and the information relating to the random data item,
- in which checking is performed in the second communication subscriber to determine whether the reproduced first fault detection data item lies in a predefinable region,
- in which a sequence fault information item is formed if the recovered first fault detection information item does not lie in a predefinable region,
- in which the sequence fault information is transmitted from the second communication subscriber to the first communication subscriber and resynchronization of the fault detection data items is carried out by means of the sequence fault information, and
- in which the first communication subscriber is a service provider and the second communication subscriber is a service user in a communications network.

2. Method according to Claim 1,
- in which the checking as to whether the recovered first fault detection data item lies in the predefinable region is carried out in such a way
- that a second fault detection data item is formed in the second communication subscriber,
- that a difference is formed between the two fault detection data items, and
- that a sequence fault is formed if the difference does not lie in the predefinable region.

3. Method according to Claim 1,
- in which the first communication subscriber verifies the sequence fault information, and
- the first communication subscriber changes a value of the first fault detection data item as a function of a value of the second fault detection data item.

4. Method according to Claim 3,
- in which the verification and the change is carried out in the first communication subscriber.

5. Method according to Claim 3 or 4,
- in which the sequence fault information contains the information about the random data item and the second fault detection data item.

6. Method according to one of Claims 2 to 5,
- in which the first and/or second fault detection data item are sequential numbers/is a sequential number.

7. Method according to one of the preceding claims,
- in which the information relating to the random data item is a random number.

8. Method according to Claim 1,
- in which the service provider is a mobile phone operator of a mobile phone system and/or the service user is a mobile phone.

9. Arrangement for checking the authenticity of a first communication subscriber in a communications network,
- in which the first communication subscriber is set up in such a way that in the first communication subscriber an authentication information item is formed using a first fault detection data item and an information item relating to a random data item,
- embodied in such a way that the authentication information and the information relating to the random data item are transmitted from the first communication subscriber to a second communication subscriber,
- in which the second communication subscriber is set up in such a way that in the second communication subscriber the first fault detection information item is reproduced using the authentication information item and the information relating to the random data item, and checking is performed in the second communication subscriber to determine whether the reproduced first fault detection data item lies in a predefinable region,
- configured in such a way that a sequence fault information item is formed if the reproduced first fault detection data item does not lie in a predefinable region,
- configured in such a way that the sequence fault information is transmitted from the second communication subscriber to the first communication subscriber and resynchronization off the fault detection data items is carried out by means of the sequence fault information, and
- in which the first communication subscriber is a service provider and the second communication subscriber is a service user in a communications network.

## Revendications

1. Procédé pour la vérification d'une authenticité d'un premier abonné aux communications dans un réseau de communication,
- dans lequel une information d'authentification est formée au niveau du premier abonné aux communications en utilisant une première donnée de reconnaissance d'erreur et une information sur une donnée aléatoire,
- dans lequel l'information d'authentification et l'information sur la donnée aléatoire sont transmises du premier abonné aux communications à un deuxième abonné aux communications,
- dans lequel, au niveau du deuxième abonné aux communications, la première donnée de reconnaissance d'erreur est restaurée en utilisant l'information d'authentification et l'information sur la donnée aléatoire,
- dans lequel on vérifie, au niveau du deuxième abonné aux communications, si la première donnée de reconnaissance d'erreur restaurée appartient à une plage définissable à l'avance,
- dans lequel une information d'erreur de séquence est formée lorsque la première donnée de reconnaissance d'erreur restaurée n'appartient pas à une plage définissable à l'avance,
- dans lequel l'information d'erreur de séquence est transmise du deuxième abonné aux communications au premier abonné aux communications et une resynchronisation des données de reconnaissance d'erreur est exécutée au moyen de l'information d'erreur de séquence,
- dans lequel le premier abonné aux communications est un fournisseur de services *(service provider)* et le deuxième abonné aux communications est un utilisateur de services dans un réseau de communication.

2. Procédé selon la revendication 1,
- dans lequel on exécute la vérification permettant de savoir si la première donnée de reconnaissance d'erreur restaurée appartient à la plage définissable à l'avance en
- formant une deuxième donnée de reconnaissance d'erreur au niveau du deuxième abonné aux communications,
- formant une différence entre les deux données de reconnaissance d'erreur,
- formant une erreur de séquence lorsque la différence n'appartient pas à la plage définissable à l'avance.

3. Procédé selon la revendication 1,
- dans lequel le premier abonné aux communications vérifie l'information d'erreur de séquence
- et le premier abonné aux communications modifie une valeur de la première donnée de reconnaissance d'erreur en fonction d'une valeur de la deuxième donnée de reconnaissance d'erreur.

4. Procédé selon la revendication 3,
- dans lequel la vérification et la modification sont exécutées au niveau du premier abonné aux communications.

5. Procédé selon la revendication 3 ou 4,
- dans lequel l'information d'erreur de séquence contient l'information sur la donnée aléatoire et la deuxième donnée de reconnaissance d'erreur.

6. Procédé selon l'une des revendications 2 à 5,
- dans lequel la première et/ou la deuxième donnée/s de reconnaissance d'erreur sont des numéros de séquence/est un numéro de séquence.

7. Procédé selon l'une des revendications précédentes,
- dans lequel l'information sur la donnée aléatoire est un nombre aléatoire.

8. Procédé selon la revendication 1,
- dans lequel le fournisseur de services est un exploitant de téléphonie mobile d'un système de radiotéléphonie mobile et/ou l'utilisateur de services est un téléphone mobile.

9. Dispositif pour la vérification d'une authenticité d'un premier abonné aux communications dans un réseau de communication,
- dans lequel le premier abonné aux communications est adapté de manière à ce qu'une information d'authentification soit formée, au niveau du premier abonné aux communications, en utilisant une première donnée de reconnaissance d'erreur et une information sur une donnée aléatoire,
- réalisé de manière à ce que l'information d'authentification et l'information sur la donnée aléatoire soient transmises du premier abonné aux communications à un deuxième abonné aux communications,
- dans lequel le deuxième abonné aux communications est adapté de manière à ce que, au niveau du deuxième abonné aux communications, la première donnée de reconnaissance d'erreur soit restaurée en utilisant l'information d'authentification et l'information sur la donnée aléatoire et qu'on vérifie, au niveau du deuxième abonné aux communications, si la première donnée de reconnaissance d'erreur restaurée appartient à une plage définissable à l'avance,
- réalisé de manière à ce qu'une information d'erreur de séquence soit formée lorsque la première donnée de reconnaissance d'erreur restaurée n'appartient pas à une plage définissable à l'avance,
- réalisé de manière à ce que l'information d'erreur de séquence soit transmise du deuxième abonné aux communications au premier abonné aux communications et qu'une resynchronisation des données de reconnaissance d'erreur soit exécutée au moyen de l'information d'erreur de séquence,
dans lequel le premier abonné aux communications est un fournisseur de services et le deuxième abonné aux communications est un utilisateur de services dans un réseau de communication.
